# EUROPÄISCHE PATENTSCHRIFT

(11) **EP 2 268 513 B1**
(45) Veröffentlichungstag und Bekanntmachung des Hinweises auf die Patenterteilung: **24.04.2013**
(21) Anmeldenummer: 09730417.4
(22) Anmeldetag: 09.02.2009
(51) Int. Cl.: B60S 1/38, B60S 1/40

(54) **WISCHBLATT**
WIPER BLADE
BALAI D'ESSUIE-GLACE

(30) Priorität: 08.04.2008 DE 102008001045
(43) Veröffentlichungstag der Anmeldung: 05.01.2011
(73) Patentinhaber: Robert Bosch GmbH, 70442 Stuttgart (DE)
(72) Erfinder: OP'T ROODT, Inigo, 3500 Hasselt (BE)
(86) Internationale Anmeldenummer: PCT/EP2009/051431
(87) Internationale Veröffentlichungsnummer: WO 2009/124792

(56) Entgegenhaltungen:
- EP-A- 2 008 891
- WO-A-2006/117081
- DE-A1- 10 036 115
- FR-A- 2 868 376

## Beschreibung

### Stand der Technik

Die Erfindung geht von einem Wischblatt nach dem Oberbegriff des Anspruchs 1 aus.

Aus der DE 10 2005 062 462 A1 ist ein Wischblatt bekannt, das einen Träger aus Kunststoff besitzt. Dieser hat einen zentralen Längskanal für die Aufnahme eines Tragelements in Form einer Federschiene. Um eine Wischleiste mit dem Träger zu verbinden, besitzt dieser ein Aufnahmeprofil in Form zweier einander gegenüberliegender Halteschienen. Diese umfassen eine Rückenleiste, die über einen Steg an einer Kopfleiste der Wischleiste angeformt ist, wobei die Halteschienen zwischen sich einen Längsschlitz für den Steg bilden. An den Längsseiten des Trägers sind in Höhe des Längskanals Stützleisten vorgesehen, auf denen sich ein Spoiler abstützt, und die an ihren Enden Aussparungen aufweisen. Diese dienen zur Sicherung von Endkappen, die auf die Enden des Trägers aufgesetzt werden und mit innen liegenden Nocken in die Aussparungen des Trägers einrasten. Ferner besitzt der Träger im mittleren Bereich an den äußeren Längsseiten seiner Stützleisten Aussparungen, um ein Anschlusselement in Längsrichtung zu fixieren, über das das Wischblatt mit einem Wischarm gelenkig verbunden wird. Bei einer Ausführung wird das Anschlusselement durch eine Abdeckkappe mit Anschlussprofilen für die Spoilerteile abgedeckt.

Bei einem weiteren Ausführungsbeispiel besitzt das Wischblatt als Tragelement zwei Federschienen. In diesem Fall hat der Träger anstelle des Längskanals ein im Querschnitt t-förmiges Profil, das über den Steg mit dem Aufnahmeprofil verbunden ist. In die so gebildeten seitlichen Längsnuten sind die Federschienen eingesetzt, wobei die Spoilerteile mit Längsführungen die aus den Längsnuten vorstehenden Teile der Federschienen umfassen.

Bei einem weiteren Ausführungsbeispiel sind der Längskanal und das Aufnahmeprofil einstückig mit dem Spoiler verbunden, indem das Bauteil in einem Mehrstoff-Extrusionsverfahren hergestellt wird. Dabei besitzt der Trägerteil zweckmäßigerweise eine größere Härte als der Spoiler.

Ein gattungsgemäßes Wischblatt ist aus dem Dokument DE-A-10036115 bekannt.

### Offenbarung der Erfindung

Nach der Erfindung bildet das Anschlusselement mit einer Anschlussplatte einen Teil des Längskanals, indem die Anschlussplatte mit ihrem Boden die der Wischleiste zugewandte Seite bildet und mit ihren Seitenwänden das Tragelement umfasst. Das Anschlusselement bildet die dem Boden gegenüberliegende Seite und überlappt mit seinen Seitenteilen die Seitenwände der Anschlussplatte. Zur Wischleiste hin ist am Boden der Anschlussplatte ein Teil des Aufnahmeprofils angeformt. Das Wischblatt ist vorteilhafterweise aus nur wenigen verschiedenen Teilen zusammengesetzt und ist leicht montierbar. Gleichzeitig ist das Tragelement, das eine oder mehrere Federschienen aufweisen kann, im Längskanal geschützt und gut biegsam. Außerdem erzeugen Relativbewegungen zwischen dem Längskanal und dem Tragelement nur eine geringe Reibung.

Die Seitenteile des Anschlusselements können die Seitenwände der Anschlussplatte innen oder außen überlappen. Zweckmäßigerweise umgreifen sie aus optischen und strömungstechnischen Gründen die Seitenwände von außen. Dabei ist es gemäß einer Ausgestaltung der Erfindung zweckmäßig, dass das Anschlusselement an seinen Seitenteilen Rastnasen aufweist, mit denen es auf die Anschlussplatte geklippst werden kann. Wenn die Seitenwände des Anschlusselements außen liegen, besitzen sie gegebenenfalls zusätzlich nach innen weisende Rastnasen, die durch Aussparungen in den Seitenwänden der Anschlussplatte ragen und am Tragelement verrasten.

Gegenüber der Anschlussplatte und damit gegenüber dem Anschlusselement wird das Tragelement zweckmäßigerweise durch einen Zentrierzapfen am Boden der Anschlussplatte in Längsrichtung fixiert, der in eine Zentrierbohrung des Tragelements eingreift.

Zum gelenkigen Verbinden des Wischblatts mit einem Wischarm besitzt das Anschlusselement einen Längssteg, an dem quer zur Längsrichtung eine Lagerachse vorgesehen ist, zweckmäßigerweise in Form zweier einander gegenüberliegender Lagerzapfen, einer Lagernabe oder sonstiger geeigneter Lagerelemente.

Wenn das Wischblatt einen Spoiler besitzt, ist es vorteilhaft, dass das Anschlusselement an seinen Enden jeweils ein Anschlussprofil für die Spoilerteile besitzt. Diese schließen sich in Längsrichtung an die Anschlussprofile des Anschlusselements an und ragen ein Stück weit in die Anschlussprofile hinein, sodass die Spoilerteile einen Teil des Längskanals und des Aufnahmeprofils bilden und das entsprechende Teilstück der Anschlussplatte und des Anschlusselements verlängern. Dabei liegen die Stirnseiten der Spoilerteile an einer Stufe des Anschlusselements im Bereich der Seitenteile an. Diese Stufe liegt ihrerseits an einer gegenüber den Seitenwänden der Anschlussplatte vorspringenden Führungsschiene der Anschlussplatte an. Somit sind die Spoilerteile zwischen den Führungsschienen und den Anschlussprofilen geführt und die aneinander anstoßenden Bauteile in Längsrichtung gegeneinander fixiert.

Die Enden des Wischblatts werden zweckmäßigerweise durch Endkappen abgeschlossen, die in Verlängerung des Längskanals der Spoilerteile jeweils einen Abschlusskanal für das Tragelement und in Verlängerung des Aufnahmeprofils der Spoilerteile Aufnahmeprofile für die Kopfleiste der Wischleiste besitzen. Umfasst das Tragelement nur eine Federschiene, wird diese zweckmäßigerweise durch eine Bohrung an ihren Enden in Längsrichtung relativ zu den Endkappen fixiert, indem jeweils eine Rastnase einer Endkappe in die zugeordnete Bohrung eingreift.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

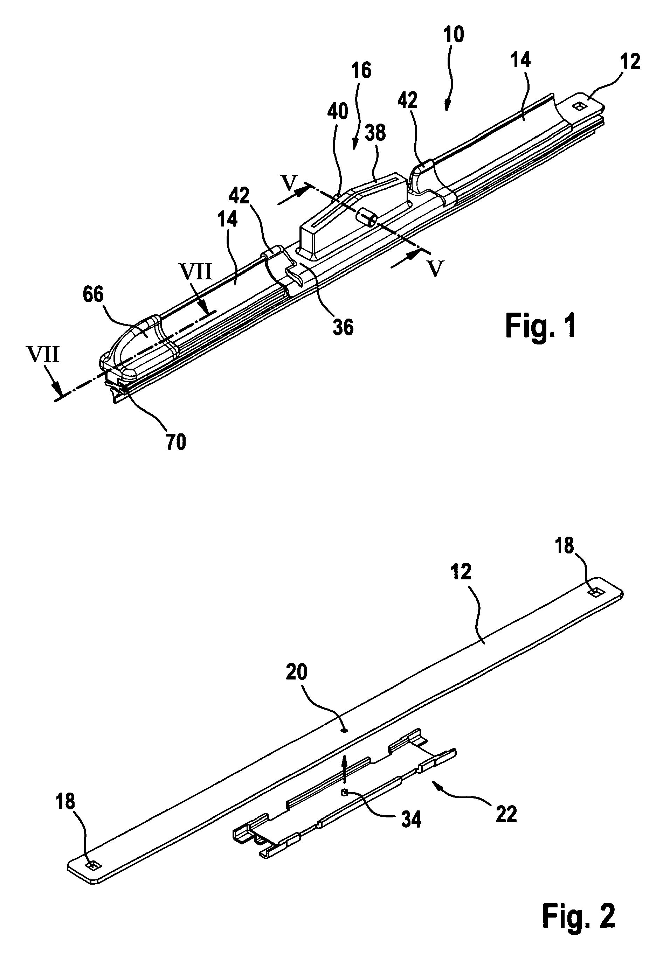

- Fig. 1: eine perspektivische Darstellung eines erfindungsgemäßen Wischblatts,
- Fig. 2: eine Explosionsdarstellung eines Tragelements mit einer Anschlussplatte,

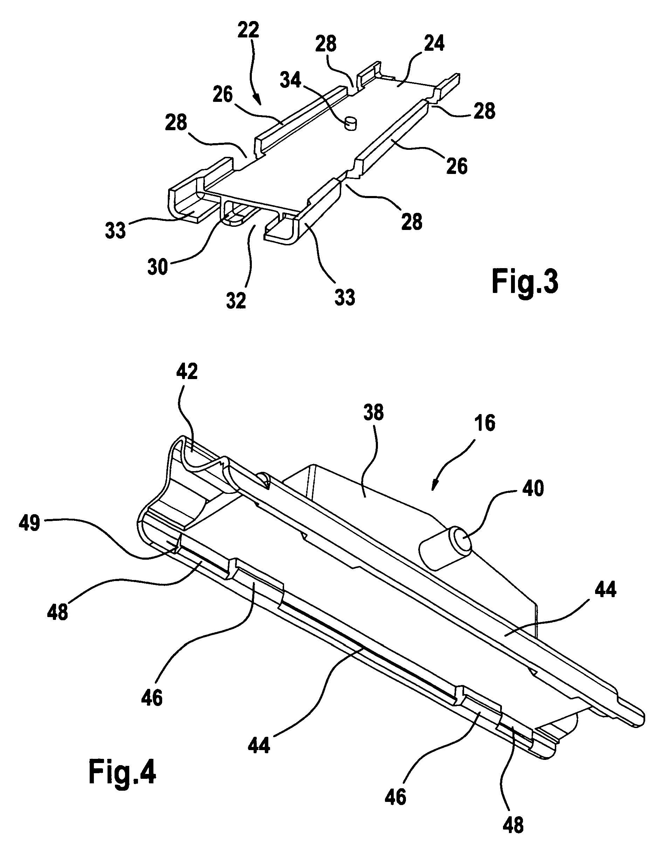

- Fig. 3: eine perspektivische Darstellung einer Anschlussplatte im vergrößerten Maßstab,
- Fig. 4: eine perspektivische Darstellung eines Anschlusselements von unten,

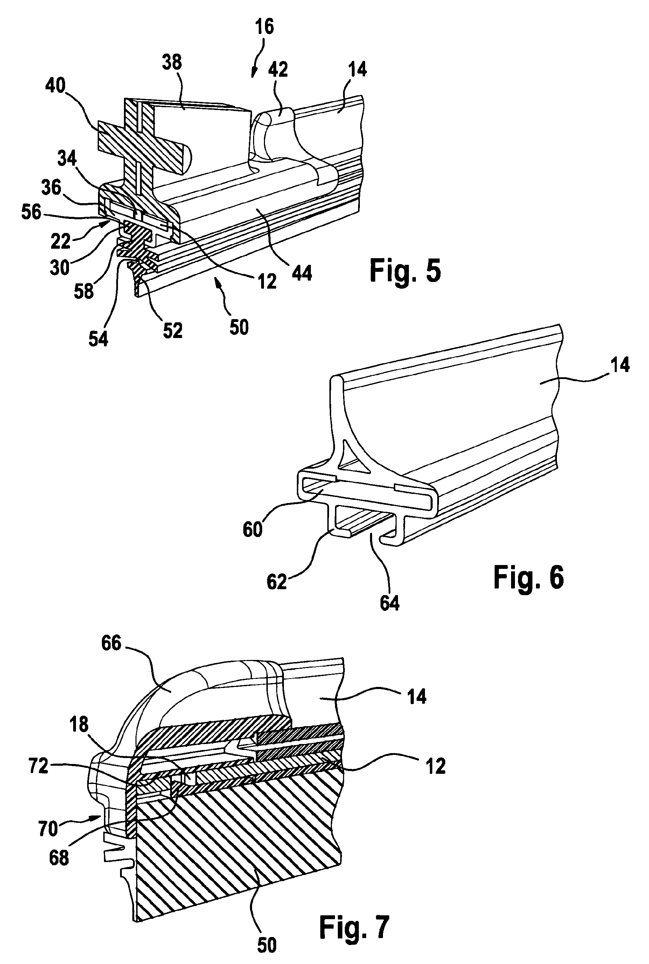

- Fig. 5: einen perspektivischen Schnitt entsprechend der Linie V-V in Fig. 1,
- Fig. 6: eine perspektivische Frontansicht eines Spoilers und
- Fig. 7: einen perspektivischen Schnitt entsprechend der Linie VII-VII.

### Ausführungsformen der Erfindung

Ein Wischblatt 10 besitzt als Tragelement 12 eine oder mehrere Federschienen, die in einem Längskanal 60 untergebracht sind. Der Längskanal 60 setzt sich aus mehreren Teilstücken zusammen, und zwar aus Teilstücken in Spoilerteilen 14 und aus einem mittleren Teilstück, der von einem Anschlusselement 16 und einer Anschlussplatte 22 gebildet wird. Das Tragelement 12 hat an seinen Enden Bohrungen 18, in die Rastnasen der Endkappen 66 eingreifen, um diese in Längsrichtung gegenüber dem Tragelement 12 zu sichern.

Im mittleren Bereich besitzt das Tragelement 12 eine Zentrierbohrung 20, in die ein Zentrierzapfen 34 der Anschlussplatte 22 eingreift, wenn das Tragelement 12 in das im Querschnitt u-förmige Profil der Anschlussplatte 22 eingelegt wird. Dadurch ist die Lage der Anschlussplatte 22 relativ zum Tragelement 12 gesichert. Die Anschlussplatte 22 umfasst mit ihren Seitenwänden 26 die Längsseiten des Tragelements 12, wobei eine Breitseite des Tragelements 12 von einem die Seitenwände 26 verbindenden Boden 24 der Anschlussplatte 22 überdeckt wird.

Von der offenen Seite der Anschlussplatte 22 wird das Anschlusselement 16 montiert, indem seine Seitenteile 44, die durch einen Boden 36 miteinander verbunden sind, die Seitenwände 26 der Anschlussplatte 22 überlappen, und zwar im vorliegenden Fall von außen. Somit bilden die Anschlussplatte 22 und das Anschlusselement 16 das mittlere Teilstück des Längskanals 60 für das Tragelement 12. Zum Anschluss der Spoilerteile 14 an das Anschlusselement 16 bzw. an die Anschlussplatte 22 besitzt das Anschlusselement 16 an seinen Enden Anschlussprofile 42, deren Innenkontur durch eine Stufe 49 gegenüber den Seitenteilen 44 nach außen versetzt ist. An den Enden der Anschlussplatte 22 sind Führungsschienen 33 vorgesehen, die seitlich gegenüber den Seitenwänden 26 und in Längsrichtung gegenüber dem Boden 24 vorstehen. Im montierten Zustand liegen an den einander zugewandten Stirnflächen der Führungsschienen 33 die Stufen 49 des Anschlusselements 16 an, sodass dieses zwischen den Führungsschienen 33 in Längsrichtung fixiert ist. Gleichzeitig wird das Anschlusselement 16 durch Rastnasen 48 an der Anschlussplatte 22 gehalten, während weitere Rastnasen 46 durch Aussparungen 28 in den Seitenwänden 26 der Anschlussplatte 22 nach innen ragen und an dem Tragelement 12 verrasten.

Auf einer einer Wischleiste 50 abgewandten Seite des Bodens 36 besitzt das Anschlusselement 16 einen Längssteg 38, der quer zur Längsrichtung ein Lagerelement in Form zweier seitlicher Lagerzapfen 40 zum gelenkigen Verbinden mit einem nicht dargestellten Wischarm aufweist.

Die Anschlussplatte 22 besitzt auf der dem Anschlusselement 16 abgewandten Seite ein am Boden 24 angeformtes Aufnahmeprofil 30, das zur Wischleiste 50 hin einen Längsschlitz 32 hat. Die Wischleiste 50 hat eine Kopfleiste 56, die durch einen Steg 58 unterteilt ist und so in das Aufnahmeprofil 30 eingesetzt werden kann. Dabei bildet der Längsschlitz 32 den Raum für den Steg 58. Die Kopfleiste 56 ist auf der dem Aufnahmeprofil 30 abgewandten Seite über einen Kippsteg 54 mit einer Wischlippe 52 verbunden.

Zu beiden Seiten der Anschlussplatte 22 wird das Aufnahmeprofil 30 durch Aufnahmeprofile 62 verlängert, die am Längskanal 60 der Spoilerteile 14 angeformt sind. An die Aufnahmeprofile 62, die einen Längsschlitz 64 besitzen, schließen sich im Bereich der Endkappen 66 Aufnahmeprofile 70 an, wobei für die Enden des Tragelements 12 in den Endkappen 66 ein Abschlusskanal 72 vorgesehen ist. Umfasst das Tragelement 12 nur eine Federschiene, wird diese zweckmäßigerweise durch eine Bohrung 18 an ihren Enden in Längsrichtung relativ zu den Endkappen 66 fixiert, indem jeweils eine Rastnase 68 einer Endkappe 66 in die zugeordnete Bohrung 18 eingreift.

## Patentansprüche

1. Wischblatt (10) mit einer Wischleiste (50), deren Kopfleiste (56) von einem Aufnahmeprofil (30, 62, 70) gehalten ist, das mit einem Längskanal (60) für ein Tragelement (12, 92) verbunden ist, wobei im mittleren Bereich des Wischblatts (10) ein Anschlusselement (16) zum gelenkigen Verbinden mit einem Wischarm vorgesehen ist, **dadurch gekennzeichnet, dass** das Anschlusselement (16) mit einer Anschlussplatte (22) einen Teil des Längskanals (60) bildet, indem die Anschlussplatte (22) mit ihrem Boden (24) die der Wischleiste (50) zugewandte Seite des Längskanals (60) bildet und mit ihren Seitenwänden (26) das Tragelement (12, 92) umfasst, während das Anschlusselement (16) die dem Boden (24) gegenüberliegende Seite des Längskanals (60) bildet und mit Seitenteilen (44) die Seitenwände (26) überlappt, wobei am Boden (24) der Anschlussplatte (22) zur Wischleiste (50) hin ein Teil des Aufnahmeprofils (30) angeformt ist.

2. Wischblatt (10) nach Anspruch 1, **dadurch gekennzeichnet, dass** das Anschlusselement (16) an seinen Seitenteilen (44) Rastnasen (48) aufweist, mit denen es auf die Anschlussplatte (22) geklippst werden kann.

3. Wischblatt (10) nach einem der vorhergehenden Ansprüche, **dadurch gekennzeichnet, dass** das Anschlusselement (16) an seinen Seitenteilen (44), die die Seitenwände (26) der Anschlussplatte (22) von außen übergreifen, nach innen weisende Rastnasen (46) hat, die durch Aussparungen (28) in den Seitenwänden (26) der Anschlussplatte (22) ragen und am Tragelement (12, 92) verrasten.

4. Wischblatt (10) nach einem der vorhergehenden Ansprüche, **dadurch gekennzeichnet, dass** die Anschlussplatte (22) an der zum Anschlusselement (16) gewandten Seite ihres Bodens einen Zentrierzapfen (34) aufweist, der in eine Zentrierbohrung (20) des Tragelements (12) eingreift.

5. Wischblatt (10) nach einem der vorhergehenden Ansprüche, **dadurch gekennzeichnet, dass** das Anschlusselement (16) einen Längssteg (38) hat, an dem quer zur Längsrichtung eine Lagerachse (40) vorgesehen ist.

6. Wischblatt (10) nach einem der vorhergehenden Ansprüche mit einem Spoiler (14), **dadurch gekennzeichnet, dass** das Anschlusselement (16) an seinen Enden jeweils ein Anschlussprofil (42) für die Spoilerteile (14) besitzt und im Bereich der Seitenteile (44) eine Stufe (49) bildet, die an gegenüber den Seitenwänden (26) der Anschlussplatte (22) vorspringenden Führungsschienen (33) der Anschlussplatte (22) anliegt.

7. Wischblatt (10) nach Anspruch 6, **dadurch gekennzeichnet, dass** sich die Spoilerteile (14) in Längsrichtung an die Anschlussprofile (42) des Anschlusselements (16) anschließen und ein Stück weit in die Anschlussprofile (42) hineinragen, wobei die Spoilerteile (14) einen Teil des Längskanals (60) und des Aufnahmeprofils (62) bilden und die entsprechenden Teilstücke der Anschlussplatte (22) und des Anschlusselements (16) verlängern.

8. Wischblatt (10) nach einem der Ansprüche 5 oder 6, **dadurch gekennzeichnet, dass** an seinen Enden Endkappen (66) vorgesehen sind, die in Verlängerung des Längskanals (60) der Spoilerteile (14) jeweils einen Abschlusskanal (72) für das Tragelement (12) und in Verlängerung des Aufnahmeprofils (62) der Spoilerteile (14) Aufnahmeprofile (70) für die Kopfleiste (56) der Wischleiste (50) besitzen.

9. Wischblatt (10) nach einem der vorhergehenden Ansprüche, **dadurch gekennzeichnet, dass** das Tragelement (12) nur eine Federschiene umfasst, die an ihren Enden Bohrungen (18) aufweist, in die jeweils eine Rastnase (68) einer Endkappe (66) einrastet.

## Claims

1. Wiper blade (10) with a wiper strip (50), the head strip (56) of which is held by a receiving profile (30, 62, 70) which is connected to a longitudinal channel (60) for a supporting element (12, 92), wherein a connecting element (16) for the articulated connection to a wiper arm is provided in the central region of the wiper blade (10), **characterized in that** the connecting element (16) together with a connecting plate (22) forms part of the longitudinal channel (60) by the base (24) of the connecting plate (22) forming that side of the longitudinal channel (60) which faces the wiper strip (50) and the side walls (26) of said connecting plate enclosing the supporting element (12, 92) while the connecting element (16) forms that side of the longitudinal channel (60) which is opposite the base (24) and, by means of side parts (44), overlaps the side walls (26), wherein part of the receiving profile (30) is integrally formed on the base (24) of the connecting plate (22) towards the wiper strip (50).

2. Wiper blade (10) according to Claim 1, **characterized in that** the side parts (44) of the connecting element (16) have latching lugs (48) with which said connecting element can be clipped onto the connecting plate (22).

3. Wiper blade (10) according to either of the preceding claims, **characterized in that** the side parts (44) of the connecting element (16) that engage over the side walls (26) of the connecting plate (22) from the outside have inwardly pointing latching lugs (46) which project through cutouts (28) in the side walls (26) of the connecting plate (22) and latch on the supporting element (12, 92).

4. Wiper blade (10) according to one of the preceding claims, **characterized in that** that side of the base of the connecting plate (22) which faces the connecting element (16) has a centring pin (34) which engages in a centring bore (20) in the supporting element (12).

5. Wiper blade (10) according to one of the preceding claims, **characterized in that** the connecting element (16) has a longitudinal web (38) on which a bearing axis (40) is provided transversely with respect to the longitudinal direction.

6. Wiper blade (10) according to one of the preceding claims with a spoiler (14), **characterized in that** the ends of the connecting element (16) both have a connecting profile (42) for the spoiler parts (14) and, in the region of the side parts (44), form a step (49) which bears against guide rails (33) of the connecting plate (22), the guide rails projecting in relation to the side walls (26) of the connecting plate (22).

7. Wiper blade (10) according to Claim 6, **characterized in that** the spoiler parts (14) are connected in the longitudinal direction to the connecting profiles (42) of the connecting element (16) and project for a distance into the connecting profiles (42), wherein the spoiler parts (14) form part of the longitudinal channel (60) and of the receiving profile (62) and extend the corresponding subsections of the connecting plate (22) and of the connecting element (16).

8. Wiper blade (10) according to either of Claims 5 and 6, **characterized in that** the ends of the wiper blade are provided with end caps (66) which, as an extension of the longitudinal channel (60) of the spoiler parts (14), each have a terminating channel (72) for the supporting element (12) and, as an extension of the receiving profile (62) of the spoiler parts (14), each have receiving profiles (70) for the head strip (56) of the wiper strip (50).

9. Wiper blade (10) according to one of the preceding claims, **characterized in that** the supporting element (12) comprises only one spring rail, the ends of which have bores (18), into each of which a latching lug (68) of an end cap (66) latches.

## Revendications

1. Balai d'essuie-glace (10) comprenant une raclette de balai d'essuie-glace (50) dont la baguette de tête (56) est maintenue par un profilé de réception (30, 62, 70) qui est connecté à un canal longitudinal (60) pour un élément porteur (12, 92), un élément de raccordement (16) pour la connexion articulée à un bras d'essuie-glace étant prévu dans la région centrale du balai d'essuie-glace (10), **caractérisé en ce que** l'élément de raccordement (16) forme avec une plaque de raccordement (22) une partie du canal longitudinal (60), la plaque de raccordement (22) formant avec son fond (24) le côté du canal longitudinal (60) tourné vers la raclette de balai d'essuie-glace (50), et entourant avec ses parois latérales (26) l'élément porteur (12, 92), tandis que l'élément de raccordement (16) forme le côté du canal longitudinal (60) opposé au fond (24) et chevauche avec des parties latérales (44) les parois latérales (26), une partie du profilé de réception (30) étant façonnée sur le fond (24) de la plaque de raccordement (22) vers la raclette de balai d'essuie-glace (50).

2. Balai d'essuie-glace (10) selon la revendication 1, **caractérisé en ce que** l'élément de raccordement (16) présente sur ses parties latérales (44) des ergots d'encliquetage (48) avec lesquels il peut être enclipsé sur la plaque de raccordement (22).

3. Balai d'essuie-glace (10) selon l'une quelconque des revendications précédentes, **caractérisé en ce que** l'élément de raccordement (16) présente sur ses parties latérales (44) qui viennent en prise par le dessus depuis l'extérieur avec les parois latérales (26) de la plaque de raccordement (22), des ergots d'encliquetage (46) tournés vers l'intérieur, qui font saillie à travers des évidements (28) dans les parois latérales (26) de la plaque de raccordement (22) et qui s'encliquettent sur l'élément porteur (12, 92).

4. Balai d'essuie-glace (10) selon l'une quelconque des revendications précédentes, **caractérisé en ce que** la plaque de raccordement (22) présente sur le côté de son fond tourné vers l'élément de raccordement (16) un tourillon de centrage (34) qui vient en prise dans un alésage de centrage (20) de l'élément porteur (12).

5. Balai d'essuie-glace (10) selon l'une quelconque des revendications précédentes, **caractérisé en ce que** l'élément de raccordement (16) présente une membrure longitudinale (38) sur laquelle est prévu un axe de support (40) transversalement à la direction longitudinale.

6. Balai d'essuie-glace (10) selon l'une quelconque des revendications précédentes, comprenant un déflecteur (14), **caractérisé en ce que** l'élément de raccordement (16) possède à ses extrémités à chaque fois un profilé de raccordement (42) pour les parties de déflecteur (14) et forme dans la région des parties latérales (44) un étage (49) qui s'applique contre des rails de guidage (33) de la plaque de raccordement (22) faisant saillie par rapport aux parois latérales (26) de la plaque de raccordement (22).

7. Balai d'essuie-glace (10) selon la revendication 6, **caractérisé en ce que** les parties de déflecteur (14) se raccordent dans la direction longitudinale aux profilés de raccordement (42) de l'élément de raccordement (16) et pénètrent quelque peu dans les profilés de raccordement (42), les parties de déflecteur (14) formant une partie du canal longitudinal (60) et du profilé de réception (62) et prolongeant les pièces partielles correspondantes de la plaque de raccordement (22) et de l'élément de raccordement (16).

8. Balai d'essuie-glace (10) selon l'une quelconque des revendications 5 ou 6, **caractérisé en ce que** des embouts (66) sont prévus à ses extrémités, lesquels possèdent, dans le prolongement du canal longitudinal (60) des parties de déflecteur (14), à chaque fois un canal de terminaison (72) pour l'élément porteur (12), et dans le prolongement du profilé de réception (62) des parties de déflecteur (14), des profilés de réception (70) pour la baguette de tête (56) de la raclette de balai d'essuie-glace (50).

9. Balai d'essuie-glace (10) selon l'une quelconque des revendications précédentes, **caractérisé en ce que** l'élément porteur (12) ne comprend qu'un rail élastique qui présente à ses extrémités des alésages (18) dans lesquels s'encliquette à chaque fois un ergot d'encliquetage (68) d'un embout (66).
